# EUROPEAN PATENT SPECIFICATION

(11) **EP 1 685 047 B1**
(45) Date of publication and mention of the grant of the patent: **22.10.2008**
(21) Application number: 04797441.5
(22) Date of filing: 10.11.2004
(51) Int. Cl.: B65G 59/10

(54) **AN APPARATUS FOR DISPENSING OF STACKED OBJECTS, A METHOD FOR DISPENSING STACKED OBJECTS AND A SYSTEM COMPRISING AN APPARATUS FOR DISPENSING**
VORRICHTUNG ZUR AUSGABE VON GESTAPELTEN OBJEKTEN, VERFAHREN ZUR AUSGABE GESTAPELTER OBJEKTE UND EINE AUSGABEVORRICHTUNG UMFASSENDES SYSTEM
APPAREIL DE DISTRIBUTION D'OBJETS EMPILES, PROCEDE DE DISTRIBUTION D'OBJETS EMPILES ET SYSTEME COMPRENANT UN APPAREIL DE DISTRIBUTION

(30) Priority: 10.11.2003 DK 200301672
(43) Date of publication of application: 02.08.2006
(73) Proprietor: Jysk Konstruktionsteknik A/S, 8900 Randers (DK)
(72) Inventor: DIDERIKSEN, Jesper, 8900 Randers (DK); CHRISTENSEN, Flemming, Aarslev, DK-8900 Randers (DK)
(74) Representative: Plougmann & Vingtoft A/S
(86) International application number: PCT/DK2004/000779
(87) International publication number: WO 2005/044703

(56) References cited:
- DE-A1- 3 913 589
- US-A- 4 288 003
- US-A- 4 961 684
- US-A- 5 918 765
- PATENT ABSTRACTS OF JAPAN vol. 007, no. 177 (M-233), 5 August 1983 (1983-08-05) -& JP 58 078919 A (SANWA FOOD SYSTEM:KK; others: 01), 12 May 1983 (1983-05-12)

## Description

### FIELD OF THE INVENTION

The invention relates to an apparatus for dispensing of stacked objects in a predetermined dispensing direction, acccording to the preamble of claim 1 and a corresponding method according to the preamble of claim 13.

### BACKGROUND OF THE INVENTION

The invention relates in general to dispensing equipment and, more particularly, to an apparatus, method and system for holding a stack of objects and dispensing them one or more at a time in a predetermined direction, onto a predetermined location and in a predetermined sequence.

Many types of products such as ice cream, meat products and prefabricated meals are packaged in objects, which have a tapered side wall. These objects are constructed with this configuration so that they may be packed and shipped in space-saving nested stacks. The stack of objects also provides a convenient method of loading the objects into a dispensing apparatus. The dispensing apparatus may be positioned over a movable mechanism such as a conveyor belt, which transports the objects from the nested stack to a filling station where the food product or other product is filled into a cavity of the objects. The thus filled object is subsequently sealed by application of a lid or other sealing device and further processed as needed.

To achieve high speed filling and subsequent processing, the objects must be dispensed reliably and at a high rate of speed from the nested stack in the dispensing apparatus. Satisfactory performance, however, is difficult to achieve, among others because the objects are not always aerodynamically stable, they may tumble as they fall from the dispensing apparatus towards the subsequent location, resulting in jamming of the apparatus and Increased material losses and operational costs. Moreover, precise timing of the release of an object from the nested stack is difficult to accomplish because of frictional forces and vacuum forces holding the object to the stack. Failure to dispense the object on time may result in further material and/or operational losses.

Construction of a suitable dispensing apparatus, which provides rapid and accurate dispensing of objects, is difficult because the apparatus must support the stack of objects while at the same time releasing the first object In the stack. To achieve higher delivery speeds and greater reliability, conventional dispensers have utilized various mechanisms for the dispensing of the objects.

US 5,067,308 describe a method and an apparatus, where the apparatus is provided for supporting and dispensing of a nested stack of containers. This Is done by a number of supporting plates being activated in a certain cycle to engage with and release of the containers along with a set of activatable mechanical trusting fingers to help release the lowermost container. However, the speed, the control, the maintenance and the reliability of this device and others alike is less than desired for use with many high-speed filling processes. There is a great demand to the control of the Individually separate supporting and releasing means, such control being difficult and being prone to failure.

DE 39 13 589 relates to a device and a method according to the preamble of claims 1 and 13 respectively, for the individual extraction or delivery of conical edible receptacles which do not have an opening edge flange and are fragile, while avolding damage to the same. The device comprises a slide for receiving a stack of these receptacles, a supporting element, two separating cam bodies which are rotatably mounted on the supporting element by means of assigned shafts, on opposite sides of the slide, a drive system and belt pulleys for transmitting the driving power from the drive system to the shafts. Each separating cam body comprises a cam cylinder part, a first excentric cam which projects radially beyond the outer circumference of one end portion of the cam cylinder part and can be brought into contact with the outside of the receptacles, a second excentric cam which projects radially beyond the outer circumference of the other end portion of the cam cylinder part and comes directly into contact with the outside of the receptacles In question, and also a helical or spiral cam which is constructed around the circumferential surface of the cam cylinder part, projects away from the latter and one end of which lies on the upper side of the first excentric cam, while its other end lies on the underside of the second excentric cam.

### SUMMARY OF THE INVENTION

It is an object of the present invention to provide a dispensing apparatus with a mechanism for supporting a stack of nested objects and for dispensing at least one object at a time with greater speed and reliability than conventional dispensing devices so that higher processing speeds and greater dispensing reliability may be obtained.

It Is also an object of the present Invention to provide a method for dispensing individual objects from a nested stack with higher speed and greater reliability than afforded by conventional methods so that other related operations subsequent to the dispensing may proceed at faster rates and with fewer interruptions.

It is also an object of the invention to provide a dispenser that is mechanically simple and Incorporates an improved control as part of the means for achieving the objects.

These objects may be obtained by a dispensing apparatus comprising the features of the appended claim 1.

A dispensing apparatus comprising these few features is surprisingly sufficient for performing a proper dispensing of the objects. However, the invention having these few features are not only enough for obtaining a proper dispensing, it results in a dispensing speed being up till twice the dispensing speed of known dispensing apparatuses. Also, the reliability during operation of the apparatus according to the invention is substantially increased because of the fewer and mechanically more simple features of the invention.

The dispensing unit of the invention may either perform a rotational displacement or a longitudinal displacement during dispensing. The rotational displacement is a rotation in one direction followed by a rotation In the opposite direction. According to a preferred embodiment related to the aspect of a rotational displacement of the dispensing unit, dispensing of at least one initial first object in the predetermined dispensing direction is achieved by the dispensing unit rotating an angle in an initial rotational direction, said angle being determined by the at least one initial first object being released from the support of the first supporting member and from the stack of objects, while at the same time an initial second object is still supported by the second supporting member.

According to a preferred embodiment related to the aspect of a longitudinal displacement of the dispensing unit, dispensing of at least one initial first object in the predetermined dispensing direction is achieved by the dispensing unit displacing linearly in an initial longitudinal direction, said linear displacement being determined by the at least one initial first object being released from the support of the first supporting member and from the stack of objects, while at the same time an initial second object is still supported by the second supporting member. In order to ensure continued dispensing of the objects and continued feed of the objects in the dispensing direction the dispensing system may comprise further means.

The further means may be a force-inducing element being positioned in an end of the stack being opposite than the position of the at least first object of the stack and substantially acting in the predetermined dispensing direction on an object being opposite to the at least first object. Alternatively or additionally such forcing means may be acting on at least some of the objects of the stack and substantially acting in the predetermined dispensing direction on at least one of the objects of the stack. Alternatively or additionally means for securing a continued feeding of objects in the dispensing direction may be an integrate element. This integrate element providing both a guiding and a forcing along the outer circumference of the objects, alternatively within an inner cavity of the object of the stack being opposite to the at last first object. Such means may e.g. be provided by blowing air towards the object in the dispensing direction and/or a spring load provided on the inside or the outside of the objects.

In order to ensure the same pressure on the lowermost object in the dispensing direction two dispensing units may be placed on top of each other. This may be provided by a second number of dispensing units are placed in a position before, seen in the dispensing direction, a first number of dispensing units, wherein the second number of dispensing units is intended for dispensing a predetermined number of objects from a second stack of objects to a first stack of objects, where said first stack of objects constitute the stack of objects primarily intended for being dispensed, and where said second stack of objects constitute a secondary stack of objects acting as a buffer for the first stack of objects. The invention also relates to a method for supporting a nested object stack and dispensing individual objects from the stack. The method comprises the steps of the appended claim 13.

A method involving these steps results In a precise, a safe and a fast dispensing of objects. This result is achieved by a dedicate sequence of steps safe-guarding that the dispensing of the first objects is performed only after the second object and the rest of the stack is supported, and that the second object and the rest of the stack is shifted to being supported by the first supporting member, only when the first supporting member is in position to do so. There Is absolutely no need for controlling these individual steps because the first supporting member and the second supporting member are mutually non-displaceable. Therefore, the mutual relationship between the supporting members is fixed.

### BRIEF DESCRIPTION OF THE DRAWINGS

The invention will be described in more detail with reference to the following, where
fig. 1 is a cross-sectional view of an embodiment of the invention intended for dispensing objects by a dispensing displacement achieved by rotation.
fig. 2 is a plane view of the embodiment of the invention seen along a preferred dispensing direction
fig. 3 shows two dispensing units according to an embodiment of the invention when supporting a stack of objects.
fig. 4 shows the dispensing units according to the invention, when a first object has been released from the stack of objects,
fig. 5 are plane views seen from above of embodiments of the first supporting member and the second supporting member,
fig.6 Is a perspective view of the second supporting member according to an embodiment of the invention, and
fig.7a-7c show embodiments of the second supporting member according to the invention.

### DETAILED DESCRIPTION OF THE INVENTION

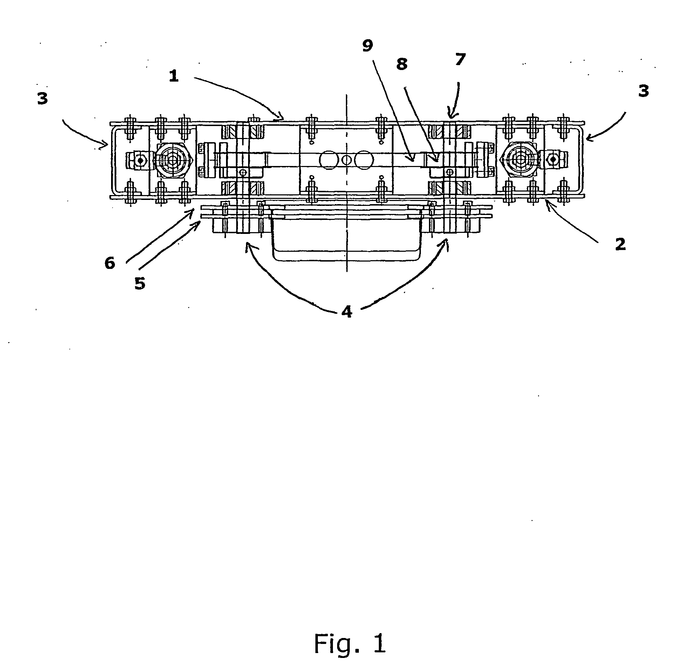

Fig. 1 is a cross-sectional view of a prefered embodiment of a dispensing apparatus intended for dispensing of objects by a dispensing displacement achieved by a rotation of a dispensing unit. The figure shows a first frame plate 1, which is connected with a second frame plate 2 by connecting frame members 3 and nuts and bolts. From the figure, two dispensing units 4 can be seen with a first supporting member 5 and a second supporting member 6 of the dispensing units 4. The first supporting member 5 and the second supporting member 6 are spaced apart though being assembled for constituting a common integrate unit, making the first supporting member 5 and the second supporting member 6 mutually non-displaceable and in common referred to as a dispensing unit. The mutual displacement of the first supporting member 4 in relation to the second supporting member 6 may be adjusted depending on the spacing between the objects of the stack.

A predetermined dispensing direction of the apparatus is a direction from above and downwards. The mutual displacement between the first supporting member and the second supporting member must be the same as the mutual spacing between the objects of the stack. The adjustment of the first supporting member and the second supporting member may be easily accomplished by replacing an element sandwiched between the supporting members, selecting an element having a thickness the same as the mutual spacing between the objects of the stack.

The first supporting member 5 and the second supporting member 6 of each of the dispensing units 4 is attached to a common shaft 7. On the shaft, a wheel 8 is positioned and intended for interaction with a belt or a chain 9, said belt or chain 9 intended for driving the shaft for making the shaft rotate. In the embodiment shown, a toothed belt is selected and the wheels 8 are toothed wheels, the tooth gearing of the wheels being in mesh with the tooth gearing of the belt. A number of dispensing units are interconnected and driven by the same belt making each of the dispensing units rotate when the one and same belt moves.

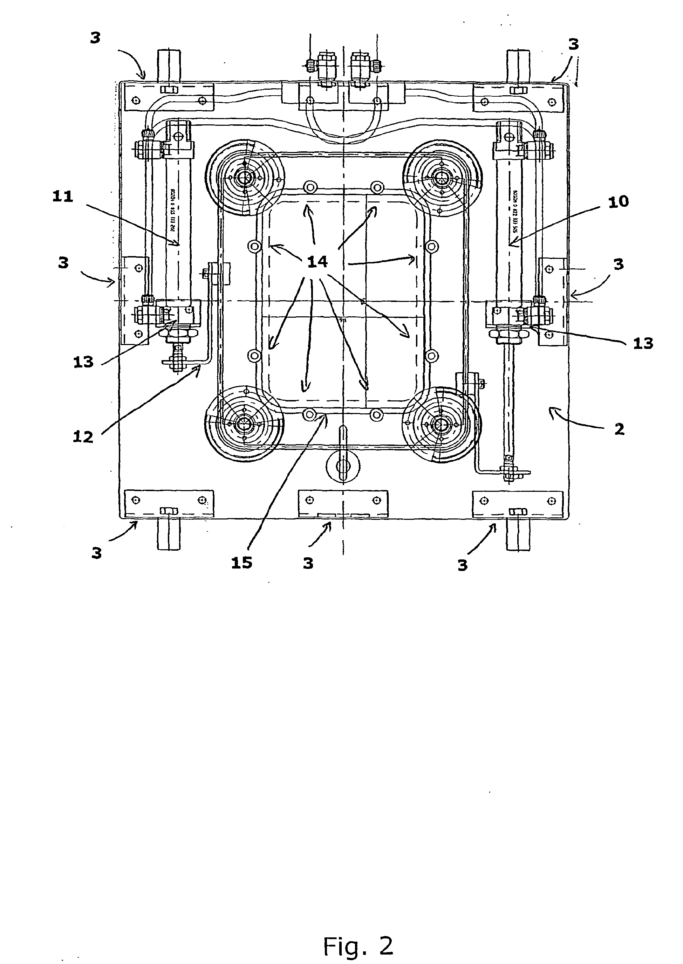

The objects to be dispensed are shown, also in a cross-sectional view, as being suspended at the bottom of the apparatus, The objects may be made out of various materials such as plastic, metal, paper and with a square, a round, a triangular, an elliptical or any other shape when seen from above (see fig. 2). Examples of such objects are containers, containers with lids hinged to the container, cups, lids, buckets etc.

Fig. 2 is a plane view of the embodiment seen in fig. 1 and seen from above in relation to the predetermined dispensing direction. The figure shows two pneumatic cylinders 10 and 11, which are connected to the toothed belt by a connecting element 12. The figure shows one of the pneumatic cylinders intended for activating the toothed belt and being in an extended position, while the other pneumatic cylinder is in a retracted position. The pneumatic cylinders are intended for being controlled by a suitable control unit controlling the pressurising of the cylinders. The pneumatic cylinders are kept in place in relation to the second frame plate 2 by positioning brackets 13. In the embodiment shown, two pneumatic cylinders are shown. However, as the pneumatic cylinders are double-acting, it is possible to use only one pneumatic cylinder.

Four dispensing units are shown, and all four dispensing units are connected by the one and same toothed belt being an end-less toothed belt. Guiding means 14 are provided for guiding the objects in the plane of the figure, thus being a plane perpendicular to the predetermined dispensing direction. The guiding means are guiding the objects along the outer circumference of the objects and are placed inside an opening 15 of the first frame plate 1 (see fig. 1) and the second frame plate 2. The opening 15 allows the objects to pass through the frame plates 1, 2.

The four dispensing units are placed as to surround the objects to be dispensed and may be placed in the "corners" of the object (when the object comprises "corners") or may also be positioned anywhere else in relation to the circumference of the objects. The number of dispensing units may be chosen depending on for example the objects to be dispensed. The supporting members may have a shape and be positioned in the immediate vicinity of the circumference of the objects to be dispensed so as to guide the object in a plane perpendicular to the dispensing direction, i.e. in the plane of the figure. Thus, the element (see fig. 1) being sandwiched between the first supporting member 5 and the second supporting member 6 may have a diameter so that the circumference of this element is abutting an outer circumference of the objects, thereby supporting the "corners" of the objects in the plane perpendicular to the preferred dispensing direction.

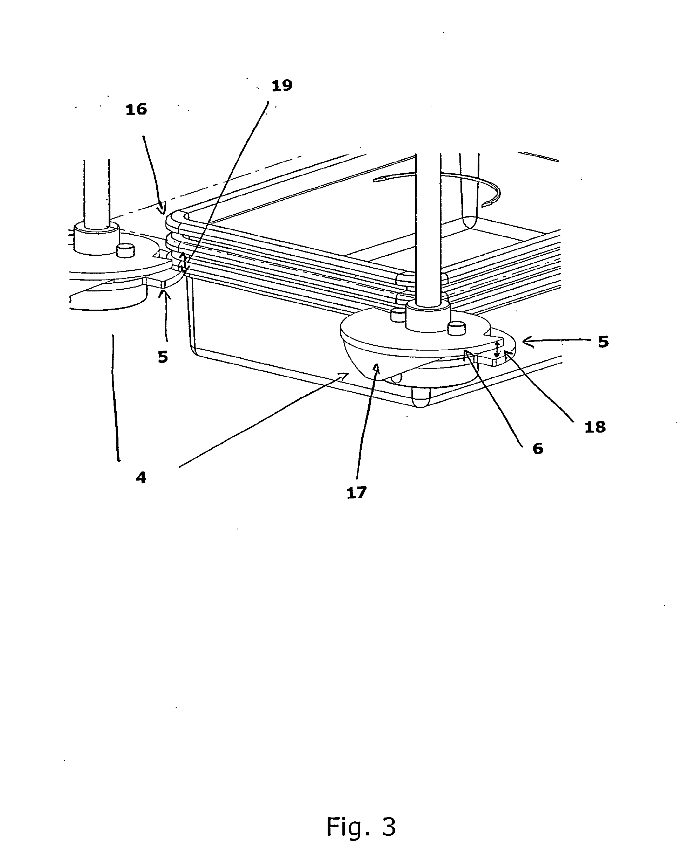

Fig. 3 shows two dispensing units 4 according to the embodiment shown in fig. 1 and fig. 2, and shown in a situation supporting a stack of objects 16 by means of the first supporting member 5 of each of the dispensing units 4.

The second supporting member 6 of the dispensing unit is provided with a protrusion 17 extending in the preferred dispensing direction. The mutual distance between the first supporting member 5 and the second supporting member 6 is indicated at 18 and indicated to be substantially equal to the distance between the stacked objects indicated at 19. The distances 18 and 19 may or may not be similar. When the objects stacked in the stack are otherwise shaped as the shown objects, e.g. have another distance 19 between the objects, the distances 18 and 19 may or may not be similar. In particular, the distance 19 between the objects may be less than the distance 18 so as to separate the objects further apart. The mutual distance between the first supporting member 5 and the second supporting member 6 then equals the incremental advancement of the stack of objects 16 as a first object lowermost in the stack is released by the first supporting member 5.

However, before the first object is released from the support by the first supporting member, the second supporting member, during rotation of the dispensing unit 4, is brought into mesh with the object nested just above the first object and in the mutual spacing between the first object and the second object. Thus, during a further rotation, the support of the first object is released, and the first object drops in the predetermined dispensing direction. Because the second supporting member at the same time is supporting the second object, the stack of objects is supported as a whole by the second supporting member, when the first object is dispensed.

Further rotation results in that the second supporting member is brought out of mesh with the stack of objects. However, before that, the first supporting member is in a position ready for supporting a new object. Thus, when the second supporting member is no longer supporting the stack of objects, the stack drops downwards and changes from being supported by the second supporting member to being supported by the first supporting member. The initial second object of the stack then becomes a subsequent first object of the stack.

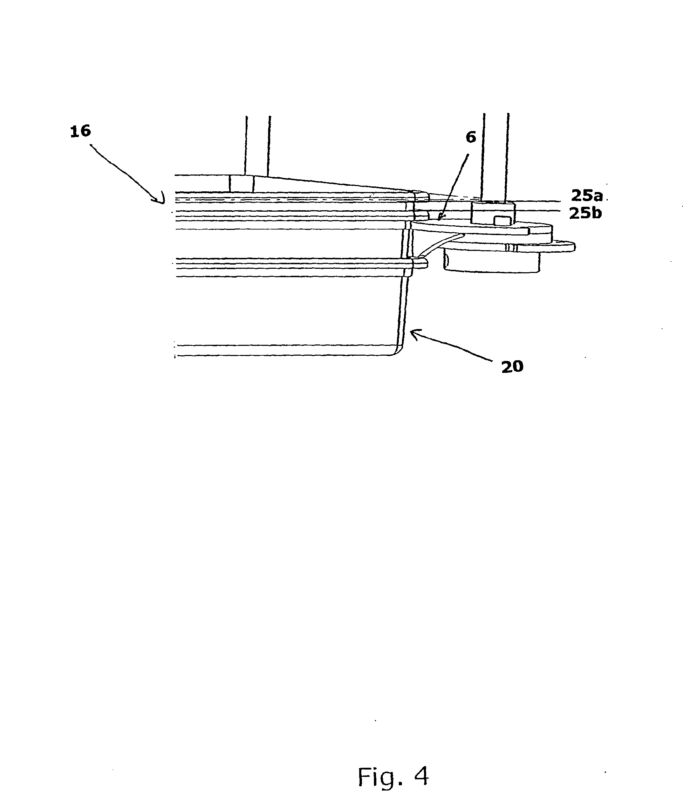

Fig. 4 shows a dispensing unit according to the embodiment shown in fig. 1-3, and in a situation when a first object 20 has been released from the first supporting member and is forced in the dispensing direction by the protrusion 17 extending from the second supporting member downwards in the dispensing direction and in a situation when the stack of objects 16 is supported by the second supporting member 6.

The protrusion may have various shapes. This releasing force exerted by the protrusion onto the first object forces the object downwards faster and more reliable than if under the influence of gravity alone, thereby reducing the tendency for the object to tumble. The stability of the object during its downwards movement is also assisted by a forced release from the stack by means of the protrusion.

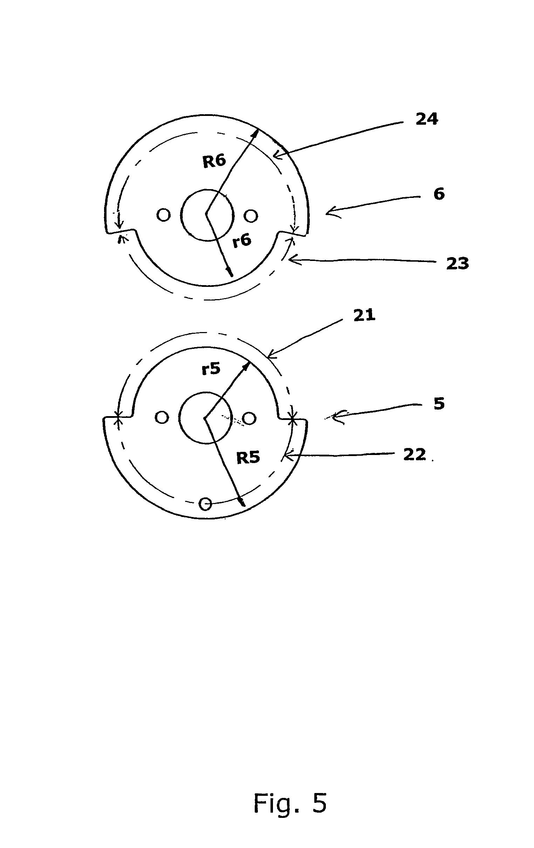

In the embodiment of the invention shown in FIG. 4, the top 25b of the second object is positioned as indicated, and the edge 25a of the object in the stack is positioned as shown. For the objects shown, the edge 25a does not overlap the top 25b of the second object. Fig. 5 shows the first supporting member 5 and the second supporting member 6 according to the embodiment shown in fig. 1-4. The first supporting member 5 has a first circular section 22 having a radius R5 and a second circular section 21 having a radius r5, the radius r5 of the second section being smaller than the radius R5 of the first section. The first section 22 extends over a circular extension being approximately 180° and thus the second section 21 also extends over a circular extension of approximately 180°. The second supporting member 6 has a first circular section 24 having a radius R6 and a second circular section 23 having a radius r6, the radius r6 of the second section 23 being smaller than the radius R6 of the first section 24. The first section 24 extends over a circular extension being approximately 203° and the second section 23 extends over a circular extension of approximately 157°. When the first supporting member and the second supporting member are individually fixed as shown in fig. 1-4, the first circular section 22 of the first supporting member 5 and the first circular extension 24 of the second supporting member will overlap by 11.5° at opposite sides of the first circular sections 22,24 of each of the first sections of the supporting members. The overlap is provided in order to assure a safe and proper dispensing of the objects, i.e. dispensing of the first object of the stack at the same time as the second object of the stack is supported by the second supporting member, and subsequently forwarding the second object of the stack towards the first supporting member, when the first circular extension of the first supporting member has been released from supporting the first object of the stack.

However, it is not a prerequisite that an overlap is established between the first sections of the supporting members. It is only a prerequisite that the first section of the second supporting member is just supporting a tiny edge of the second object of the stack, when the first object is dispensed, and that the first supporting member is just supporting a tiny edge of the second object of the stack when the stack is forwarded during release of the support by the first section of the second supporting member. Accordingly, the first section of the first supporting member may extend over a circular extension smaller than 180° together with the first section of the second supporting member perhaps also extending over a circular extension smaller than 180°, or vice versa. The specific circular extension of the first sections of the first supporting member and the second supporting member depends on the actual shape and the size of the edge of the objects to be dispensed.

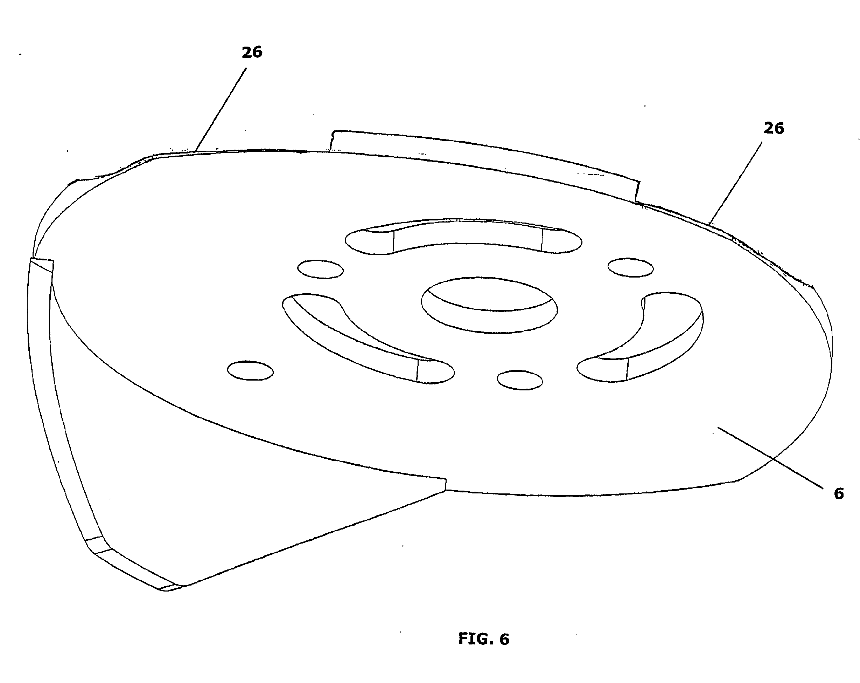

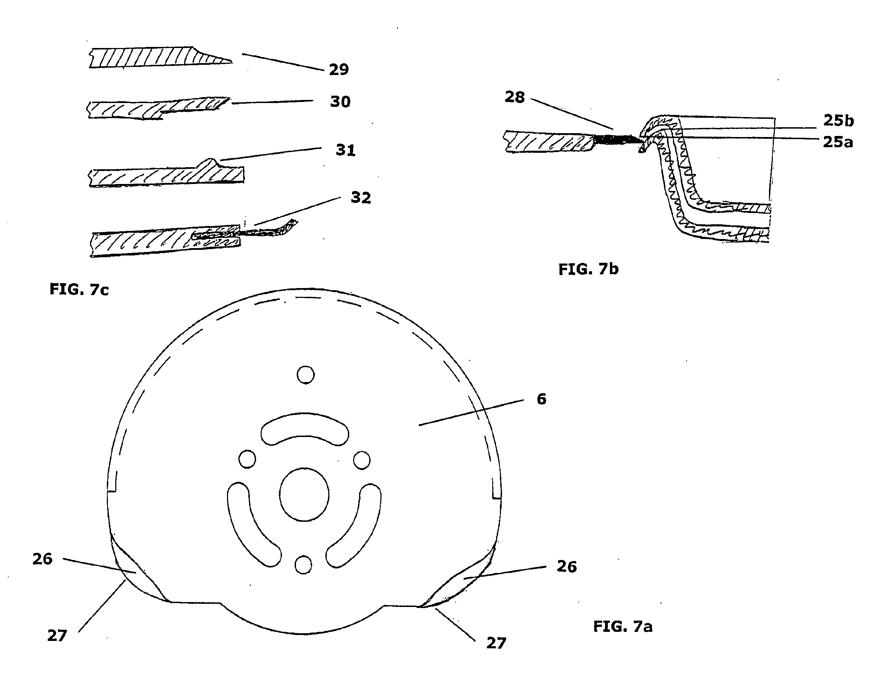

The leading edges of the first sections of the supporting members may be blunt as illustrated in fig. 3. This is satisfactory, if the mutual spacing between the objects is relatively large as shown in fig. 3 and fig. 4. However, if the mutual spacing between the objects is very small, it may be necessary or at least advantageous making the leading edges of the first section of the second supporting member sharp, so that the leading edge is capable of entering a narrow spacing between the objects. In a preferred such embodiment, the leading edge is made sharp and part of the first section immediately following the leading edge is formed having the shape of a wedge. By making the leading edge and part of the first section of the supporting part of the second supporting member form a shape of a wedge the apparatus, as mentioned, makes it possible to split objects with very little spacing between the levels of objects. Dispensing of such objects is further discussed in the description of fig. 6 and fig.7.

Fig. 6 is a perspective view of the second supporting member 6 according to an embodiment of the invention. The supporting member is formed with a sharpened edge 26. The material extent, seen in an upwards direction perpendicular to a tangent of the edge 26 of the supporting member increases gradually, opposite to the direction of rotation. In the embodiment shown, the direction of rotation is intended for alternating and therefore the gradual increase of the material thickness is shown in both opposite directions. When providing the supporting member with a gradually increasing material thickness, an easier separation is obtained and/or a further separation is obtained of the objects in the stack from each other.

Fig. 7a-7c show embodiments of the second supporting member 6 according to the invention. Fig. 7a is a top view of the second supporting member 6. The radius of the second supporting member may be gradually increasing such as shown along the curvature 27. The gradually increase of the radius of the second supporting member provides an easier separation form each other and/or a further separation from each other of the objects in the stack. The gradually increase of the radius may be provided together with a sharpened edge 26 ad shown in fig. 6.

FIG. 7b shows two objects to be dispensed. In the embodiment shown the top 25b of the second object is positioned as indicated at 25b and the edge 25a of the object in the stack is positioned as shown. In relation to the objects shown, the edge 25a is overlapping the top 25b of the second object. A cross-section 28 of the edge of the second supporting member is shown in a situation just before the edge of the supporting member will be lifting and/or be supporting the edge 25a. The cross-sectional view may be taken from the area indicated in the top view at 26 in a radial direction.

FIG. 7c shows four alternative cross-sections of the edge of the second supporting member for lifting and/or for supporting the edge 25a. The cross-sectional views may be taken from the area indicated in the top view at 26 in a radial direction. The edge 25a may have wedge-shaped cross-sections. The cross-section 31 has a protrusion on top of the supporting member,said protrusion providing a separation of the objects. The cross-section 32 indicates an edge of the supporting member being provided with an element of a flexible material such as a tongue or sheet of metal, plastic or rubber. Providing the edge with flexible metal, plastic or rubber may increase the possibility of the system separating objects exhibiting a so-called negative overlay along the edges of the objects. Any of the described means may be used as the only means for providing a supporting or lifting means of the object, but may also be used in a combination with two or more of the ways of lifting and/or supporting the objects being described with reference to one or more of the other figures.
An alternative embodiment to the first supporting member and the second supporting member having circular sections and dispensing the objects by a rotating movement, the first supporting member and the second supporting member may have linear sections and may be intended for dispensing objects by a longitudinal movement. Thus, a first supporting member may be provided linearly in extension of one side of the first object of the stack in a first level, and a second supporting member may be provided linearly in extension of one or another side of the second object of the stack in a second level.

The difference between the first level of the first linear and longitudinally displaceable supporting member and the second level of the second linear and longitudinally displaceable supporting member corresponds to the mutual spacing between the objects of the stack just as the individual spacing of the supporting members shown in fig. 1-4.

The leading edge and part of, or perhaps all of, the supporting members may be sharp and formed as a wedge, respectively. The distance along the longitudinally displaceable direction of the supporting members is less than the length of the edges of objects which the supporting members are intended for supporting. Thereby, it is assured that the second object, when the first object is dispensed by releasing the support of the first supporting member, is supported, and that the second object when being forwarded towards the first supporting member by releasing the support of the second supporting member, will be caught by the first supporting member after dispensing of the first object.

At high processing speeds, it is critical that the dispensed objects are dispensed with a precise timing. Many conventional dispensers employ elaborate mechanical drive systems to actuate and time the dispensing process. Even with such actuating systems, many conventional dispensers are only capable of operating at levels to around at the most one hundred dispensed object per minute and may fail being reliable and simple to control and maintain. The dispenser of the present invention, however, is achieving speeds in excess of one hundred and eighty cycles per minute while accurate and reliably dispensing the objects. It may thus be seen that the present invention provides rapid and reliable dispensing of objects one at a time from a nested stack of objects.

From the foregoing, it will be seen that this invention is one well adapted to attain all of the objects set forth together with other advantages which are obvious and which are inherent to the apparatus. As many possible embodiments may be made of the invention without departing from the scope of the appended claims, it is to be understood that all matter herein set forth or shown in the accompanying drawings is to be interpreted as illustrative and not in a limiting sense.

## Claims

1. A dispensing apparatus intended for dispensing of stacked objects in a predetermined dispensing direction, the dispensing apparatus comprising
- at least one guiding means (14) intended for guiding the stack of objects (16) and
- at least one dispensing unit (4) intended for repetitive dispensing of at least one object (20) at a time and said dispensing unit (4) furthermore comprising
- mutually integrate first supporting member (5) and second supporting member (6) intended for supporting a first object and a second object, respectively, of the stacked objects,
- where the first object is an object being an outermost object and intended for immediate subsequent release in the predetermined dispensing direction,
- where the second object is an object being an object neighboring the first object and situated between the first object and the remaining stack of objects,
- said first supporting member (5) and said second supporting member (6) being spaced (18) apart and exhibiting a mutual displacement,
- said mutual displacement being sufficient for the second supporting member (6), during operation of the apparatus, to support the second object, when the first supporting member (5), during operation of the apparatus, releases the first object, and wherein dispensing of at least one Initial first object in the predetermined dispensing direction is achieved by the dispensing unit (4) performing a displacement in an initial displacement direction, said displacement being determined by the at least one initial first object being released from the support of the first supporting member (5) and from the stack of objects, while at the same time an initial second object is still supported by the second supporting member (6), **characterized in that** dispensing of at least a subsequent first object in the predetermined dispensing direction is achieved by the dispensing unit (4) performing a displacement in a displacement direction being the opposite than the initial displacement direction, said opposite displacement being determined by the at least one subsequent first object being released from the support of the first supporting member (5) and from the stack of objects, while at the same time a subsequent second object is still supported by the second supporting member (6).

2. An apparatus according to claim 1, wherein the Initial displacement direction and the displacement being the opposite the initial displacement direction are provided by the dispensing unit (4) rotating.

3. An apparatus according to claim 1, wherein the initial displacement direction and the displacement being the opposite the initial displacement direction are provided by the dispensing unit displacing linearly in a longitudinal direction.

4. An apparatus according to any of the preceding claims, wherein the second supporting member (6) is provided with a protrusion (17) extending in the predetermined dispensing direction, said protrusion (17) being intended for forcing the first object in the dispensing direction, when being released from the support of the first supporting member (5).

5. An apparatus according to any of the preceding claims, wherein a guiding element is positioned between the first supporting member (5) and the second supporting member (6), said guiding member intended for guiding the first object in a plane perpendicular to the predetermined dispensing direction.

6. An apparatus according to any of the preceding claims, wherein a guiding element is positioned in vicinity of the second supporting member (6), opposite to the first supporting member, said guiding member intended for guiding the second object in a plane perpendicular to the predetermined dispensing direction.

7. An apparatus according to any of the preceding claims, wherein a guiding element is positioned in vicinity of the second supporting member (6), opposite to the first supporting member (5), said guiding member intended for guiding a part of the stack of objects in a plane perpendicular to the predetermined dispensing direction.

8. An apparatus according to any of the preceding claims, wherein the apparatus comprises means intended for guiding the stack of objects along an outer circumference of the objects by surrounding the stack of objects by a plurality of guiding elements (14) extending opposite to the predetermined dispensing direction.

9. An apparatus according to any of the preceding claims, wherein the apparatus comprises means intended for guiding the stack of objects along an inner circumference of an inner cavity of the objects by insertion of a guiding element inside an object being positioned in an end of the stack being opposite than the position of the at least first object of the stack.

10. Apparatus according to any of claims 1-9, wherein the apparatus comprises means intended for forcing the objects in the predetermined dispensing direction by means of a force element being positioned in an end of the stack being opposite than the position of the first object of the stack and substantially acting in the predetermined dispensing direction on an object being opposite to the first object.

11. Apparatus according to any of claims 1-9, wherein the apparatus comprises means intended for forcing the objects in the predetermined dispensing direction by means of a force element being positioned along at least some of the objects of the stack and substantially acting in the predetermined dispensing direction on at least one of the objects of the stack.

12. Apparatus according to any of claims 5-11, wherein the guiding elements and the force elements are integrate so that guiding and forcing is intended for being performed by the same number of integrate elements along the outer circumference of the objects, alternatively within an inner cavity of the object of the stack being opposite to the first object.

13. A method for supporting and dispensing of stacked objects, said method comprising the steps of:
(a) guiding the objects of the stack in a plane perpendicular to a predetermined dispensing direction
(b) initially supporting a first object by a first supporting member (5) and supporting a second object and the remainder of the stack by a second supporting member (6),
(c) supporting an initial second object by the second supporting member (6) and thereby supporting the stack by the second supporting member (6)
(d) displacing the first supporting member (5) and the second supporting member (6), said displacing of the supporting members (5, 6) resulting in
(e) releasing the first object from the support by the first supporting member (5), and thereby dispensing the first object from the stack,
(f) releasing the stack of objects from the support by the second supporting member (6), thereby displacing the stack of objects in the dispensing direction, resulting in
(g) supporting the initial second object by the first supporting member (5) and thereby supporting the stack of objects by the first supporting member (5),
(h) repeating steps (c) through (g) for dispensing additional objects from the stack of objects, **characterized in that** a displacement direction of displacing the first and second supporting member (5, 6) is in an opposite direction for each object being dispensed.

14. A method according to claim 13, the method including the additional step of forcing the first object in the dispensing direction by inserting a protrusion in a spacing between the first object and the second object and displacing the protrusion in the dispensing direction.

15. A method according to claim 13 or 14, including the additional step of dispensing of the first object in timed relation to subsequent equipment, such as a conveyor belt, for handling the first object.

16. A system for handling objects and comprising an apparatus according to any of claims 1-6.

17. A system according to claim 16, wherein a second number of dispensing units are placed in a position before, seen in the dispensing direction, a first number of dispensing units (4), wherein the second number of dispensing units is intended for dispensing a predetermined number of objects from a second stack of objects to a first stack of objects, where said first stack of objects constitute the stack of objects primarily intended for being dispensed, and where said second stack of objects constitute a secondary stack of objects acting as a buffer for the first stack of objects.

18. A system according to claim 16 or 17, wherein this second number of dispensing units operates in a slower cycle than the first number of dispensing units (4), and where the second number of dispensing units is intended for releasing more first objects at a time than the number of first objects intended for being released by the first number of dispensing units (4).

19. A system according to any of the preceding claims 16-18, wherein a circumference of the second supporting member (6) has a material extent gradually increasing seen in a direction perpendicular with a tangent of the circumference of the supporting member (6).

20. A system according to claim 19, wherein the circumference of the supporting member (6) exhibits a sharpened edge along a circumference of the supporting member (6).

## Patentansprüche

1. Ausgabevorrichtung, vorgesehen für die Ausgabe von gestapelten Objekten in einer vorbestimmten Ausgaberichtung, die Ausgabevorrichtung umfassend
- mindestens ein Führungsmittel (14), das für die Führung des Objektstapels (16) vorgesehen ist, und
- mindestens eine Ausgabeeinheit (4), die für die sich wiederholende Ausgabe von jeweils mindestens einem Objekt (20) vorgesehen ist, und wobei die Ausgabeeinheit (4) weiterhin umfasst
- ein erstes Aufnahmeelement (5) und ein zweites Aufnahmeelement (6), die miteinander integriert sind und die zur Aufnahme eines ersten Objekts bzw. eines zweiten Objekts der gestapelten Objekte vorgesehen sind,
- wobei das erste Objekt ein Objekt ist, das ein äußerstes Objekt ist und für die sofortige nachfolgende Freigabe in der vorbestimmten Ausgaberichtung vorgesehen ist,
- wobei das zweite Objekt ein Objekt ist, das ein dem ersten Objekte benachbartes Objekt ist und sich zwischen dem ersten Objekt und dem restlichen Objektstapel befindet,
- wobei das erste Aufnahmeelement (5) und das zweite Aufnahmeelement (6) beabstandet (18) sind und eine Versetzung miteinander zeigen,
- und wobei die Versetzung miteinander ausreicht, dass das zweite Aufnahmeelement (6) das zweite Objekt während des Betriebs der Vorrichtung aufnimmt, wenn das erste Aufnahmeelement (5) das erste Objekt während des Betriebs der Vorrichtung freigibt, und wobei die Ausgabe mindestens eines anfänglichen ersten Objekts in der vorbestimmten Ausgaberichtung erreicht wird, indem die Ausgabeeinheit (4) eine Versetzung in einer anfänglichen Versetzungsrichtung durchführt, wobei die Versetzung durch die Freigabe des mindestens einen anfänglichen ersten Objekts von der Auflage des ersten Aufnahmeelements (5) und von dem Objektstapel bestimmt wird, während gleichzeitig ein anfängliches zweites Objekt weiterhin von dem zweiten Aufnahmeelement (6) aufgenommen ist, **dadurch gekennzeichnet, dass** die Ausgabe mindestens eines nachfolgenden ersten Objekts in der vorbestimmten Ausgaberichtung erreicht wird, indem die Ausgabeeinheit (4) eine Versetzung in einer Versetzungsrichtung durchführt, die entgegengesetzt zur anfänglichen Versetzungsrichtung ist, wobei die entgegengesetzte Versetzung durch die Freigabe des mindestens einen nachfolgenden ersten Objekts von der Auflage des ersten Aufnahmeelements (5) und von dem Objektstapel bestimmt wird, während gleichzeitig ein nachfolgendes zweites Objekt weiterhin von dem zweiten Aufnahmeelement (6) aufgenommen ist.

2. Vorrichtung nach Anspruch 1, wobei die anfängliche Versetzungsrichtung und die Versetzung, die der anfänglichen Versetzungsrichtung entgegengesetzt ist, durch eine Drehung der Ausgabeeinheit (4) bereitgestellt werden.

3. Vorrichtung nach Anspruch 1, wobei die anfängliche Versetzungsrichtung und die Versetzung, die der anfänglichen Versetzungsrichtung entgegengesetzt ist, durch eine lineare Versetzung der Ausgabeeinheit (4) in einer Längsrichtung bereitgestellt werden.

4. Vorrichtung noch einem der vorhergehenden Ansprüche, wobei das zweite Aufnahmeelement (6) mit einem Vorsprung (17) versehen ist, der sich in der vorbestimmten Ausgaberichtung erstreckt, wobei der Vorsprung (17) dazu vorgesehen ist, das erste Objekt in die Ausgaberichtung zu zwingen, wenn es von der Auflage des ersten Aufnahmeelements (5) freigegeben wird.

5. Vorrichtung noch einem der vorhergehenden Ansprüche, wobei ein Führungselement zwischen dem ersten Aufnahmeelement (5) und dem zweiten Aufnahmeelement (6) angeordnet ist, wobei das Führungselement für die Führung des ersten Objekts in einer Ebene senkrecht zur vorbestimmten Ausgaberichtung vorgesehen ist.

6. Vorrichtung noch einem der vorhergehenden Ansprüche, wobei ein Führungselement in der Nähe des zweiten Aufnahmeelements (6) gegenüber dem ersten Aufnahmeelement angeordnet ist, wobei das Führungselement für die Führung des zweiten Objekts in einer Ebene senkrecht zur vorbestimmten Ausgaberichtung vorgesehen ist.

7. Vorrichtung noch einem der vorhergehenden Ansprüche, wobei ein Führungselement in der Nähe des zweiten Aufnahmeelements (6) gegenüber dem ersten Aufnahmeelement (5) angeordnet ist, wobei das Führungselement für die Führung eines Teils des Objektstapels in einer Ebene senkrecht zur vorbestimmten Ausgaberichtung vorgesehen ist.

8. Vorrichtung noch einem der vorhergehenden Ansprüche, wobei die Vorrichtung Mittel umfasst, die für die Führung des Objektstapels entlang eines äußeren Umfangs der Objekte vorgesehen sind, indem der Objektstapel von einer Vielzahl von Führungselementen (14) umgeben wird, die sich entgegengesetzt zur vorbestimmten Ausgaberichtung erstrecken.

9. Vorrichtung nach einem der vorhergehenden Ansprüche, wobei die Vorrichtung Mittel umfasst, die für die Führung des Objektstapels entlang eines inneren Umfangs einer inneren Vertiefung der Objekte vorgesehen ist, indem ein Führungselement in das Innere eines Objekts eingeführt wird, das an einem Ende des Stapels gegenüber der Position des mindestens ersten Objekts des Stapels angeordnet ist.

10. Vorrichtung nach einem der Ansprüche 1-9, wobei die Vorrichtung Mittel umfasst, die dazu vorgesehen sind, die Objekte mittels eines Kraftelements, das an einem Ende des Stapels gegenüber der Position des ersten Objekts des Stapels angeordnet ist und im Wesentlichen in der vorbestimmten Ausgaberichtung auf ein Objekt gegenüber dem ersten Objekt einwirkt, in die vorbestimmte Ausgaberichtung zu zwingen.

11. Vorrichtung nach einem der Ansprüche 1-9, wobei die Vorrichtung Mittel umfasst, die dazu vorgesehen sind, die Objekte mittels eines Kraftelements, das entlang mindestens einiger der Objekte des Stapels angeordnet ist und im Wesentlichen in der vorbestimmten Ausgaberichtung auf mindestens eines der Objekte des Stapels einwirkt, in die vorbestimmte Ausgaberichtung zu zwingen.

12. Vorrichtung noch einem der Ansprüche 5-11, wobei die Führungselemente und die Kraftelemente miteinander integriert sind, sodass vorgesehen ist, das Führen und Zwingen von der gleichen Anzahl integrierter Elemente entlang des äußeren Umfangs der Objekte, hilfsweise innerhalb einer inneren Vertiefung des Objekts des Stapels gegenüber dem ersten Objekt durchzuführen.

13. Verfahren zum Aufnehmen und Ausgeben gestapelter Objekte, das Verfahren umfassend die Schritte:
(a) Führen der Objekte des Stapels in einer Ebene senkrecht zu einer vorbestimmten Ausgaberichtung
(b) anfänglich Aufnehmen eines ersten Objekts durch ein erstes Aufnahmeelement (5) und Aufnehmen eines zweiten Objekts und den Rest des Stapels durch ein zweites Aufnahmeelement (6),
(c) Aufnehmen eines anfänglichen zweiten Objekts durch das zweite Aufnahmeelement (6) und **dadurch** Aufnehmen des Stapels durch das zweite Aufnahmeelement (6)
(d) Versetzen des ersten Aufnahmeelements (5) und des zweiten Aufnahmeelements (6), wobei das Versetzen der Aufnahmeelemente (5, 6) führt zu
(e) Freigeben des ersten Objekts von der Auflage durch das erste Aufnahmeelement (5) und **dadurch** Ausgeben des ersten Objekts vom Stapel,
(f) Freigeben des Objektstapels von der Auflage des zweiten Aufnahmeelements (6), wodurch der Objektstapel in der Ausgaberichtung versetzt wird, was führt zu
(c) Aufnehmen des anfänglichen zweiten Objekts durch das erste Aufnahmeelement (5) und **dadurch** Aufnehmen des Objektstapels durch das erste Aufnahmeelement (5),
(h) Wiederholen von Schritt (c) bis (g) für die Ausgabe zusätzlicher Objekte von dem Objektstapel, **dadurch gekennzeichnet, dass** eine Versetzungsrichtung zum Versetzen des ersten und zweiten Aufnahmeelements (5, 6) in einer entgegengesetzten Richtung für jedes ausgegebene Objekt ist.

14. Verfahren nach Anspruch 13, wobei das Verfahren den zusätzlichen Schritt enthält, das erste Objekt durch Einführen eines Vorsprungs in einen Raum zwischen dem ersten Objekt und dem zweiten Objekt und Versetzen des Vorsprungs in die Versetzungsrichtung in die Versetzungsrichtung zu zwingen.

15. Verfahren nach Anspruch 13 oder 14, enthaltend den zusätzlichen Schritt, das erste Objekt in einem zeitlichen Verhältnis zu nachfolgender Ausrüstung, wie einem Förderband, zur Handhabung des ersten Objekts auszugeben.

16. System für die Handhabung von Objekten und umfassend eine Vorrichtung gemäß einem der Ansprüche 1-6.

17. System nach Anspruch 16, wobei eine zweite Anzahl Ausgabeeinheiten in einer Position, in Ausgaberichtung gesehen, vor einer ersten Anzahl Ausgabeeinheiten (4) angeordnet ist, wobei die zweite Anzahl Ausgabeeinheiten für die Ausgabe einer vorbestimmten Anzahl Objekte aus einem zweiten Objektstapel zu einem ersten Objektstapel vorgesehen ist, wobei der erste Objektstapel den Objektstapel darstellt, der primär für die Ausgabe vorgesehen ist, und wobei der zweite Objektstapel einen sekundären Objektstapel darstellt, der als ein Puffer für den ersten Objektstapel dient.

18. System nach Anspruch 16 oder 17, wobei diese zweite Anzahl Ausgabeeinheiten mit einem langsameren Zyklus als die erste Anzahl Ausgabeeinheiten (4) arbeitet und wobei die zweite Anzahl Ausgabeeinheiten zur Freigabe von jeweils mehr ersten Objekten vorgesehen ist als die Anzahl erster Objekte, die zur Freigabe durch die erste Anzahl Ausgabeeinheiten (4) vorgesehen ist.

19. System nach einem der vorhergehenden Ansprüche 16-18, wobei ein Umfang des zweiten Aufnahmeelements (6) eine Materialausdehnung aufweist, die, in einer Richtung senkrecht zu einer Tangente des Umfangs des Aufnahmeelements (6) gesehen, allmählich zunimmt.

20. System nach Anspruch 19, wobei der Umfang des Aufnahmeelements (6) eine zugespitzte Kante entlang eines Umfangs des Aufnahmeelements (6) aufweist.

## Revendications

1. Appareil de distribution destiné à distribuer des objets empilés dans une direction de distribution prédéterminée, l'appareil de distribution comprenant
- au moins un moyen de guidage (14) destiné à guider la pile d'objets (16) et
- au moins une unité de distribution (4) destinée à distribuer de manière répétitive au moins un objet (20) à la fois et ladite unité de distribution (4) comprenant en outre
- un premier élément de support (5) et un second élément de support (6) mutuellement intégrés destinés à supporter un premier objet et un second objet, respectivement, des objets empilés,
- où le premier objet est un objet qui est un objet le plus extérieur et destiné à la libération suivante immédiate dans la direction de distribution prédéterminée,
- où le second objet est un objet qui est un objet voisin du premier objet et situé entre le premier objet et la pile d'objets restante,
- ledit premier élément de support (5) et ledit second élément de support (6) étant espacés (18) et présentant un déplacement mutuel,
- ledit déplacement mutuel étant suffisant pour que le second élément de support (6), pendant le fonctionnement de l'appareil, supporte le second objet, lorsque le premier élément de support (5), pendant le fonctionnement de l'appareil, libère le premier objet, et dans lequel la distribution d'au moins un premier objet initial dans la direction de distribution prédéterminée est réalisée par l'unité de distribution (4) effectuant un déplacement dans une direction de déplacement initiale, ledit déplacement étant déterminé par la libération de l'au moins un premier objet initial du support du premier élément de support (5) et de la pile d'objets, tandis qu'en même temps un second objet initial est toujours supporté par le second élément de support (6), **caractérisé en ce que** la distribution d'au moins un premier objet suivant dans une direction de distribution prédéterminée est réalisée par l'unité de distribution (4) effectuant un déplacement dans une direction de déplacement qui est opposée à la direction de déplacement initiale, ledit déplacement opposé étant déterminé par la libération de l'au moins un premier objet suivant du support du premier élément de support (5) et de la pile d'objets, tandis qu'en même temps, un second objet suivant est toujours supporté par le second élément de support (6).

2. Appareil selon la revendication 1, dans lequel la direction de déplacement initiale et le déplacement qui est opposé à la direction de déplacement initiale sont fournis par le pivotement de l'unité de distribution (4).

3. Appareil selon la revendication 1, dans lequel la direction de déplacement initiale et le déplacement qui est opposé à la direction de déplacement initiale sont fournis par le déplacement linéaire de l'unité de distribution dans une direction longitudinale.

4. Appareil selon l'une quelconque des revendications précédentes, dans lequel le second élément de support (6) est muni d'une saillie (17) s'étendant dans la direction de distribution prédéterminée, ladite saillie (17) étant destinée à pousser le premier objet dans la direction de distribution lorsqu'il est libéré du support du premier élément de support (5).

5. Appareil selon l'une quelconque des revendications précédentes, dans lequel un élément de guidage est positionné entre le premier élément de support (5) et le second élément de support (6), ledit élément de guidage étant destiné à guider le premier objet dans un plan perpendiculaire à la direction de distribution prédéterminée.

6. Appareil selon l'une quelconque des revendications précédentes, dans lequel un élément de guidage est positionné au voisinage du second élément de support (6), à l'opposé du premier élément de support, ledit élément de guidage étant destiné à guider le second objet dans un plan perpendiculaire à la direction de distribution prédéterminée.

7. Appareil selon l'une quelconque des revendications précédentes, dans lequel un élément de guidage est positionné au voisinage du second élément de support (6), à l'opposé du premier élément de support (5), ledit élément de guidage étant destiné à guider une partie de la pile d'objets dans un plan perpendiculaire à la direction de distribution prédéterminée.

8. Appareil selon l'une quelconque des revendications précédentes, dans lequel l'appareil comprend un moyen destiné à guider la pile d'objets le long d'une circonférence extérieure des objets en entourant la pile d'objets par une pluralité d'éléments de guidage (14) s'étendant à l'opposé de la direction de distribution prédéterminée.

9. Appareil selon l'une quelconque des revendications précédentes, dans lequel l'appareil comprend un moyen destiné à guider la pile d'objets le long d'une circonférence intérieure d'une cavité intérieure des objets par l'insertion d'un élément de guidage à l'intérieur d'un objet qui est positionné dans une extrémité de la pile qui est opposée à la position de l'au moins premier objet de la pile.

10. Appareil selon l'une quelconque des revendications 1 à 9, dans lequel l'appareil comprend un moyen destiné à pousser les objets dans la direction de distribution prédéterminée au moyen d'un élément de poussée qui est positionné dans une extrémité de la pile qui est opposée à la position du premier objet de la pile et agissant substantiellement dans la direction de distribution prédéterminée sur un objet qui est opposé au premier objet.

11. Appareil selon l'une quelconque des revendications 1 à 9, dans lequel l'appareil comprend un moyen destiné à pousser les objets dans la direction de distribution prédéterminée au moyen d'un élément de poussée qui est positionné le long d'au moins une partie des objets de la pile et agissant substantiellement dans la direction de distribution prédéterminée sur au moins un des objets de la pile.

12. Appareil selon l'une quelconque des revendications 5 à 11, dans lequel les éléments de guidage et les éléments de poussée sont intégrés de façon à ce que le guidage et la poussée soient destinés à être effectués par le même nombre d'éléments intégrés le long de la circonférence extérieure des objets, en variante dans une cavité intérieure de l'objet de la pile qui est opposé au premier objet.

13. Procédé pour supporter et distribuer des objets empilés, ledit procédé comprenant les étapes consistant à :
(a) guider les objets de la pile dans un plan perpendiculaire à une direction de distribution prédéterminée,
(b) supporter au départ un premier objet par un premier élément de support (5) et supporter un second objet et le reste de la pile par un second élément de support (6),
(c) supporter un second objet initial par le second élément de support (6) et supporter ainsi la pile par le second élément de support (6)
(d) déplacer le premier élément de support (5) et le second élément de support (6), ledit déplacement des éléments de support (5,6) conduisant à
(e) libérer le premier objet du support par le premier élément de support (5), et distribuer ainsi le premier objet de la pile,
(f) libérer la pile d'objets du support par le second élément de support (6), déplaçant ainsi la pile d'objets dans la direction de distribution, conduisant à
(g) supporter le second objet initial par le premier élément de support (5) et supporter ainsi la pile d'objets par le premier élément de support (5),
(h) répéter les étapes (c) à (g) pour distribuer des objets supplémentaires de la pile d'objets, **caractérisé en ce qu'**une direction de déplacement du premier et du second élément de support (5, 6) s'effectue dans une direction opposée pour chaque objet qui est distribué.

14. Procédé selon la revendication 13, le procédé comprenant l'étape supplémentaire consistant à pousser le premier objet dans la direction de distribution en insérant une saillie dans un espacement entre le premier objet et le second objet et en déplaçant la saillie dans la direction de distribution.

15. Procédé selon la revendication 13 ou 14, comprenant l'étape supplémentaire consistant à distribuer le premier objet dans une relation synchronisée avec un équipement suivant, tel qu'une bande transporteuse, pour manipuler le premier objet.

16. Système pour manipuler des objets et comprenant un appareil selon l'une quelconque des revendications 1 à 6.

17. Système selon la revendication 16, dans lequel un second nombre d'unités de distribution sont placées dans une position avant, vu dans la direction de distribution, un premier nombre d'unités de distribution (4), dans lequel le second nombre d'unités de distribution sont destinées à distribuer un nombre prédéterminé d'objets d'une seconde pile d'objets à une première pile d'objets, où ladite première pile d'objets constitue la pile d'objets principalement destinée à être distribuée, et où ladite seconde pile d'objets constitue une pile d'objets secondaire servant de tampon pour la première pile d'objets.

18. Système selon la revendication 16 ou 17, dans lequel ce second nombre d'unités de distribution fonctionne dans un cycle plus lent que le premier nombre d'unités de distribution (4), et où le second nombre d'unités de distribution est destiné à libérer plus de premiers objets à la fois que le nombre de premiers objets destinés à être libérés par le premier nombre d'unités de distribution (4).

19. Système selon l'une quelconque des revendications précédentes 16 à 18, dans lequel une circonférence du second élément de support (6) a une étendue matérielle augmentant progressivement, vu dans une direction perpendiculaire à une tangente de la circonférence de l'élément de support (6).

20. Système selon la revendication 19, dans lequel la circonférence de l'élément de support (6) présente un chant vif le long d'une circonférence de l'élément de support (6).
